# EUROPÄISCHE PATENTSCHRIFT

(11) **EP 2 341 371 B1**
(45) Veröffentlichungstag und Bekanntmachung des Hinweises auf die Patenterteilung: **30.11.2016**
(21) Anmeldenummer: 10015536.5
(22) Anmeldetag: 10.12.2010
(51) Int. Cl.: G01V 3/10

(54) **Detektorsonde**
Detector probe
Sonde de détecteur

(30) Priorität: 30.12.2009 DE 202009017637 U; 14.01.2010 DE 102010004584
(43) Veröffentlichungstag der Anmeldung: 06.07.2011
(73) Patentinhaber: Ebinger, Klaus, 51149 Köln (DE)
(72) Erfinder: Ebinger, Klaus, 51149 Köln (DE)
(74) Vertreter: Heim, Florian Andreas

(56) Entgegenhaltungen:
- EP-A2- 0 393 387
- EP-A2- 1 324 077
- EP-B1- 1 010 990
- WO-A1-02/091021
- DE-A1- 10 301 951

## Beschreibung

Die Erfindung betrifft eine Detektorsonde mit einer Sende- und einer Empfängereinrichtung für elektromagnetische Signale, wobei die Sendeeinrichtung eine Anordnung mit einer ersten Schleife und einen die Schleife umschließenden ersten Ringkern aufweist und wobei die Empfängereinrichtung eine zweite Anordnung mit einer zweiten Schleife und einen diese Schleife umschließenden zweiten Ringkern hat.

Eine derartige Detektorsonde ist aus der EP 1 010 990 B1 bekannt.
Bei dieser bekannten Detektorsonde vermeidet man bereits die übliche auf der Sendeseite und Empfängerseite bei den entsprechenden Spulen eingesetzte Drahtwickeltechnik. Die aus dieser Druckschrift bekannte Detektorsonde ist jedoch im Hinblick auf den Einsatz als Torsonde konzipiert und vor allen Dingen für die Personenkontrolle auf Flughäfen gedacht, so dass nicht erlaubte Gegenstände, welche die Person mit sich trägt, detektiert werden können.
Diese bekannte Detektorsonde ist aufgrund der vorgesehenen Metallrahmen sowohl im Hinblick auf ihre Größe wie auch ihre thermische Drift und Entkopplungseigenschaften zwischen Sende- und Empfängerspule ungeeignet, als aktives Sensorsystem für kleine Detektorsonden, z.B. Handsonden, mit hoher Sensorempfindlichkeit eingesetzt werden zu können.

Andere Detektorsonden weisen Spulen mit meist 20 bis 60 Windungen auf, so dass Schwierigkeiten bei der Aufnahme in das entsprechende Gehäuse bestehen. Bei einer Ausbildung dieser Windungen als sehr dünne Leiter muss man den Nachteil eines relativ hohen Widerstandes für die Detektion in Kauf nehmen. Auch ist es relativ aufwändig, Spulen mit einer derart hohen Windungszahl herzustellen. Im Hinblick auf eine hohe Induktivität der einzelnen Spulen für ein aussagekräftiges Detektionsergebnis ist man bisher jedoch auf eine relativ hohe Windungszahl angewiesen.

Um eine aufwändige Herstellung von Spulen bzw. Schleifen mit mehreren Wicklungen bzw. Windungen zu vermeiden, realisiert man teilweise auch Spulen in Multilayer-Technik auf Leiterplatten. Ein Beispiel hierfür ist die EP 0 393 387 A1. Hierbei werden auf verschiedenen Ebenen einer Leiterplatte mehrere Windungen einer Spule vorgesehen. Dies bringt einerseits eine gewisse Vereinfachung bei Spulen mit mehreren Windungen, wobei jedoch andererseits der Aufbau von Spulen auf Leiterplatten in Multilayer-Technik teilweise höhere Kosten bedingt. Hinzu kommt, dass die Flexibilität bei der Auslegung der Spulen auf Leiterplatten auch von den Rahmenbedingungen, wie der Produktion dieser Leiterplatten, Einschränkungen unterliegt.

Weitere Detektorsonden, z.B. mit mehreren Anordnungen von Spulen und Schleifen sind beispielsweise aus der DE 36 19 308 C1 oder der EP 0 607 605 B1 bekannt. Bei anderen Detektorsonden wird die Anregung auf der Sendeseite bzw. die Abnahme einer induzierten Spannung auf der Empfängerseite meist direkt an der entsprechenden Spule oder Schleife vorgenommen. Dies bedeutet auch eine direkte Verbindung der Spule bzw. Schleife mit einer Driver-Elektronik und nachgeschalteten Verarbeitungseinrichtungen.
Ein Beispiel für eine derartige Auslegung und Verschaltung von Spulen mit mehreren Windungen ist in der DE 36 15 652 A1 beschrieben.

Die DE 29 27 842 beschreibt die Möglichkeit eine Suchspule mittels eines Transformators anzuregen.

Andere Aufbauten für Metalldetektoren sind beispielsweise aus US 2,917,732, GB 1595437 oder US 4,293,815 bekannt. Ein System mit verstellbaren Suchspulen ist in DE 101 64 302 B1 beschrieben.

Unter Berücksichtigung der vorausgehend aufgezeigten Nachteile im Stand der Technik liegt daher der Erfindung die Aufgabe zugrunde, eine Detektorsonde mit hoher Empfindlichkeit und guter Betriebsstabilität zu schaffen, die insbesondere als kleine, aktive und von einer Person tragbare Detektorsonde ausgebildet ist.

Diese Aufgabe wird erfindungsgemäß durch eine Detektorsonde mit den Merkmalen des Anspruchs 1 gelöst.

Weitere vorteilhafte Ausführungsformen sind in den Unteransprüchen, der Beschreibung sowie den Figuren und deren Beschreibung aufgezeigt.

Ein Grundgedanke der Erfindung kann darin gesehen werden, dass Spulen herkömmlicher Detektoren, welche eine relativ hohe Induktivität haben, durch niederohmige Schleifen mit geringer Induktivität ersetzt werden. Die Schleifen haben hierbei ein bis drei Windungen, vorzugsweise nur eine Windung. Bei der Detektorsonde wird daher zum Aussenden und Empfangen der Signale eine Ringkerntechnik eingesetzt. Dabei bildet der Ringkern zusammen mit der Sende- oder Empfangsschleife einen Transformator. Die Schleife verläuft jeweils durch den Ringkern, wobei beim Aussenden des elektromagnetischen Signals die erste Schleife als Primärwicklung und die zweite Schleife als Sekundärwicklung fungiert.

Ein weiterer wesentlicher Gedanke der Erfindung kann darin gesehen werden, dass die Anregung der ersten Spulenanordnung bzw. die Abnahme der Signale sekundärseitig in der zweiten Spulenanordnung nunmehr indirekt durch den jeweiligen Ringkern erfolgt. Der Ringkern, der aus Eisen und/oder Ferrit bestehen kann, hat dementsprechend eine eigene Wicklung mit einer Vielzahl von Windungen.
Die erste und zweite Schleife werden im Wesentlichen in der gleichen Ebene angeordnet, so dass relative Veränderungen oder Verschiebungen zueinander zur Beeinflussung des Kopplungsfaktors in einfacher Weise durchführbar sind.

Gemäß der Erfindung wird durch die geometrische Konfiguration der ersten und zweiten Schleife der Spulenanordnungen, insbesondere durch eine teilweise Überlappung der Schleifen, eine weitgehende Vorentkopplung der Sende- und Empfangsschleife durchgeführt, so dass eine Induzierung von elektromagnetischen Impulsen auf die Schleife der Empfängerseite bzw. Sekundärseite weitestgehend vermieden wird.

Im Rahmen dieser Erfindung werden die Begriffe Spule im Sinne einer Vielzahl von Windungen, der Begriff Schleife im Sinne von nur einer oder weniger Windungen und der Begriff Spulenanordnung als Kombination einer Schleife mit einem Ringkern mit Spule verstanden. Dementsprechend weist eine Spule eine relativ hohe Induktivität und einen hohen Widerstand auf, während eine Schleife eine geringe Induktivität und einen geringen Widerstand hat.

Die Auslegung des ersten und zweiten Ringkerns im Sinne eines Ringkerntransformators, durch den die jeweilige Schleife primär- und sekundärseitig geführt ist, erlaubt es z.B. primärseitig einen relativ hohen Wechselstrom auf die erste Schleife zu induzieren.
Bei einem Übersetzungsverhältnis zwischen Ringkern und Sendeschleife von z.B. 20 : 1 und einer verlustfreien transformatorischen Übertragung, ergibt sich bei einer Primärspannung von nur 10 V_{SS} und einem Wechselstrom von 10 mA_{SS} durch die Abwärtstransformation vom Ringkerntransformator in die Sendeschleife eine Spannung von 0,5 V_{SS} und ein Strom von 200 mA_{SS}. Umgekehrt verhält es sich auf der Empfangsseite. In der Empfängerschleife, die durch den entsprechenden Ringkern verläuft, wird eine Spannung empfangen, die im Verhältnis 1 : 20 hochtransformiert ist.

Die gemäß Anspruch 1 ausgelegte Detektorsonde erlaubt daher primärseitig eine Abwärtstransformation vom ersten Ringkern auf die erste Schleife zum Aussenden der elektromagnetischen Signale. Sekundärseitig wird eine Aufwärtstransformation von der zweiten Schleife auf den zweiten Ringkern zum Empfangen der sekundärseitigen elektromagnetischen Signale durchgeführt. Das Übersetzungsverhältnis zwischen Ringkern und der entsprechenden Schleife kann daher entsprechend den gewünschten technischen Anwendungen eingestellt werden. Es kann vorteilhaft sein, ein größeres Übersetzungsverhältnis bei der empfängerseitigen zweiten Schleife vorzusehen als bei der primärseitigen ersten Schleife, um die empfangenen Signale so zusätzlich zu verstärken.

In ähnlicher Weise wie das Übersetzungsverhältnis kann auch die Betriebsfrequenz des ersten Ringkerns senderseitig variiert und eingestellt werden, um beispielsweise auf die exakte Geometrie der Detektorsonde besser abgestimmt zu sein.

Die in der Detektorsonde verwendeten ersten und zweiten Schleifen können mit wenigen Windungen, insbesondere mit einer, zwei oder drei Windungen, ausgeführt sein. Besonders vorteilhaft ist es, an Stelle herkömmlicher Anordnungen mit definiertem Eingang und Ausgang die Schleifen als Kurzschlussschleifen auszubilden. Ein weiterer Vorteil wird dadurch erreicht, dass die erste und/oder zweite Schleife auf Masse gelegt wird.
Durch eine derartige Auslegung können aufwändige Abschirmungen in Art eines Faradayschen Käfigs entfallen. Des Weiteren verringert sich durch das direkte auf Masse Legen der Schleifen die Fehleranfälligkeit aufgrund dielektrischer Effekte.

Durch die Auslegung der ersten und zweiten Schleife als Kurzschlussschleife mit einer Windung wird einerseits eine Gewichtsreduzierung und andererseits eine kostengünstige Herstellung erreicht, da aufwändige Drahtwicklungen vermieden werden. Des Weiteren erreicht man mit der Ausbildung der Schleife mit einer Windung eine hohe Temperaturunempfindlichkeit. Dies ist insbesondere von Vorteil, wenn die Detektorsonde abgestimmte LC-Kreise aufweist, die bei hohen Temperaturen ihre Impedanz verändern können und damit in der Frequenz, Phase und/oder Amplitude erheblich driften können.
Bei der Verwendung einer Kurzschlussschleife wird dies weitgehend ausgeschlossen.

Die Verwendung von Schleifen im Vergleich zu Spulen verringert das Problem des thermischen Driftens bzw. kann dieses weitgehend eliminieren.
Die thermische Drift elektronischer Elemente resultiert im Wesentlichen aus Kupferverlusten, die bei Erwärmung den Innenwiderstand von Spulen erhöhen, und damit auch deren relativ hohe Eigenkapazität verändern.
Aufgrund des Einsatzes von Schleifen mit einer Windung kann daher die Langzeitstabilität eines erfindungsgemäßen aktiven Detektorsystems erheblich verbessert werden.

Eine weitere Vereinfachung bei der Herstellung einer derartigen Detektorsonde kann dadurch erreicht werden, dass die erste und/oder die zweite Schleife auf einer Platine ausgebildet werden. Aufgrund der geringen Anzahl von Windungen, insbesondere bei einer Windung, kann auf eine teure Multilayer-Technik verzichtet werden, so dass eine einlagige Platine eingesetzt werden kann. Auch ist es nicht erforderlich, aufgrund von einer oder wenigen Windungen der einzelnen Schleifen, die Leiterbahnen hierfür sehr eng aneinander vorzusehen. Aus diesem Grund brauchen die Leiterbahnen auch nicht dünn ausgeführt werden, zumal dünne Leiterbahnen zu einem hochohmigen Verhalten neigen, welches im Sondensystem zu einer geringen Empfangssensibilität führen kann.

Bei einer erfindungsgemäßen Detektorsonde können daher die Schleifen mit relativ breiten Leiterbahnen auf Platinen und insbesondere als gedruckte Leiterbahnen bzw.

Schaltungen aufgebaut sein.
Falls gewünscht oder erforderlich könnte hierfür auch eine Multilayer-Technik eingesetzt werden.

Bevorzugt wird, die erste und die zweite Schleife so anzuordnen, dass sie sich mindestens teilweise überlappen oder ineinander angeordnet sind. Hierdurch ist es möglich, schon beim Design der Sonde die Kopplungseigenschaften der Spulenanordnungen im Sinne einer geometrischen Entkopplung zu beeinflussen. Es hat sich auch als großer Vorteil gezeigt, wenn die erste und/oder die zweite Schleife relativ zueinander verschiebbar bzw. variierbar angeordnet sind. Grundsätzlich ist es aber nicht notwendig, die gesamte Schleife verschiebbar auszubilden. Vielmehr können positive Effekte im Hinblick auf eine Entkopplung der Spulenanordnungen bereits dadurch erreicht werden, dass lediglich Teile der ersten und/oder zweiten Schleife beweglich ausgeführt sind. Insbesondere kann dies mit Drahtbrücken, die durch den Ringkern geführt sind, oder die Teil der z.B. als Leiterbahn gedruckten Schleife sind, realisiert werden.

Hierdurch ist es möglich, die elektromagnetischen Kopplungseigenschaften der Schleifen relativ flexibel aufeinander einzustellen und zu variieren. Dies ermöglicht auch den Betrieb mit verschiedenen Frequenzen. Sofern bewegliche Teile der Schleife mit einem biegbaren Draht realisiert werden, ermöglicht die Veränderung des Drahtes in seiner Position bzw. eine geringfügige Lageveränderung, insbesondere im Bereich des Ringkerns, eine Kompensation von Drifteinflüssen und eine Entkopplung der Schleifen, wobei auch die Feinjustierung der Schleifen relativ zueinander hierdurch erreicht werden kann.

Die Detektorsonde kann mit unterschiedlichen Betriebstechniken verwendet werden. Bevorzugt sind hierbei die CW- (Continuous Wave) oder die PI- (Pulse Induction) Technik. Bei der auch als Sinustechnik bezeichneten CW-Technik wird eine kontinuierliche Sinusschwingung oder sinusähnliche Schwingung an die Sendeschleife angelegt. Dies erfolgt über den entsprechenden Ringkern. Empfangsseitig werden dementsprechend kontinuierliche Signale abgenommen, die bei Anwesenheit von metallischen oder detektierbaren Objekten verändert werden.
Bei der PI-Technik bzw. der Transmitter-Receiver-Technik werden kurze Impulse durch die Sendeschleife ausgesendet, die sekundärseitig bei vorhandenen zu detektierenden Objekten entsprechend der induzierten Wirbelströme empfangen werden. Sofern kein gleichzeitiges Aussenden und Empfangen von Impulsen systemgemäß vorgesehen ist, ist es auch möglich, die Sendeschleife zusätzlich als Empfangsschleife zu verwenden.
Grundsätzlich ist es denkbar, dass die erfindungsgemäße Detektorsonde nicht nur mit zwei Spulenanordnungen ausgestattet und betrieben wird, sondern dass mehrere Spulenanordnungen vorgesehen sind. Beispielsweise können bei einem CW-System eine Sendeschleife und mehrere Empfangsschleifen vorhanden sein.

Aufgrund der geringen Windungszahl und der einfachen Anregung der Schleifen über die Ringkerne kann die Anordnung der Schleifen mit unterschiedlichen Geometrien relativ einfach realisiert werden. Die erste und die zweite Schleife können in diesem Sinn eine Doppel-D-Konfiguration bilden, wobei die Entkopplung in Längsrichtung vorgesehen sein kann. Derartige Detektorsonden mit Entkopplung in Längsrichtung haben in der Sondenmitte über die ganze Länge eine hochempfindliche Detektionszone und eignen sich besonders zur Detektion von Kleinteilen oder zur humanitären Mienenortung.

Eine andere bevorzugte Konfiguration ist eine Doppel-D-Konfiguration der ersten und der zweiten Schleife, wobei die Entkopplung über die Querrichtung vorgesehen ist. Bei dieser Schleifengeometrie mit nahezu runden Sende- und Empfangsschleifen und Entkopplung in Querrichtung kann eine hohe Reichweite erreicht werden und auch größere Metallteile in größerer Entfernung detektiert werden.

Entsprechend einer weiteren bevorzugten Schleifengeometrie weisen die erste und die zweite Schleife eine konzentrische Anordnung auf. Bei derartigen Anordnungen kann der notwendige Durchmesser der Sonde reduziert werden.
Grundsätzlich ist es möglich, mit der erfindungsgemäßen Detektorsonde verschiedene Schleifengeometrien zu realisieren. Es ist auch denkbar, auf dem Rücken einer eingesetzten Leiterplatine eine umlaufende Sendeschleife zu realisieren. Innere Schleifen z.B. in der Konfiguration einer Acht können hierbei differenzierend wirken. Die Signale der Empfangsschleife können auch einer Differenz- und/oder Additionsverstärkung zur weiteren Auswertung zugeführt werden. Auf diese Weise ist es möglich, z.B. auch bodenmagnetische Effekte zu reduzieren oder auszugleichen.

Die Erfindung wird nachfolgend anhand von Ausführungsbeispielen und schematischen Zeichnungen näher erläutert. In diesen Zeichnungen zeigen:
- Fig. 1: eine Prinzipansicht der erfindungsgemäßen Detektor-Sonde;
- Fig. 2: eine erfindungsgemäße Detektor-Sonde in Doppel-D-Konfiguration mit Querrichtungsentkopplung;
- Fig. 3: eine erfindungsgemäße Detektor-Sonde in Doppel-D-Konfiguration mit Längsrichtungsentkopplung; und
- Fig. 4: eine erfindungsgemäße Detektor-Sonde mit zwei konzentrisch angeordneten Spulenanordnungen.

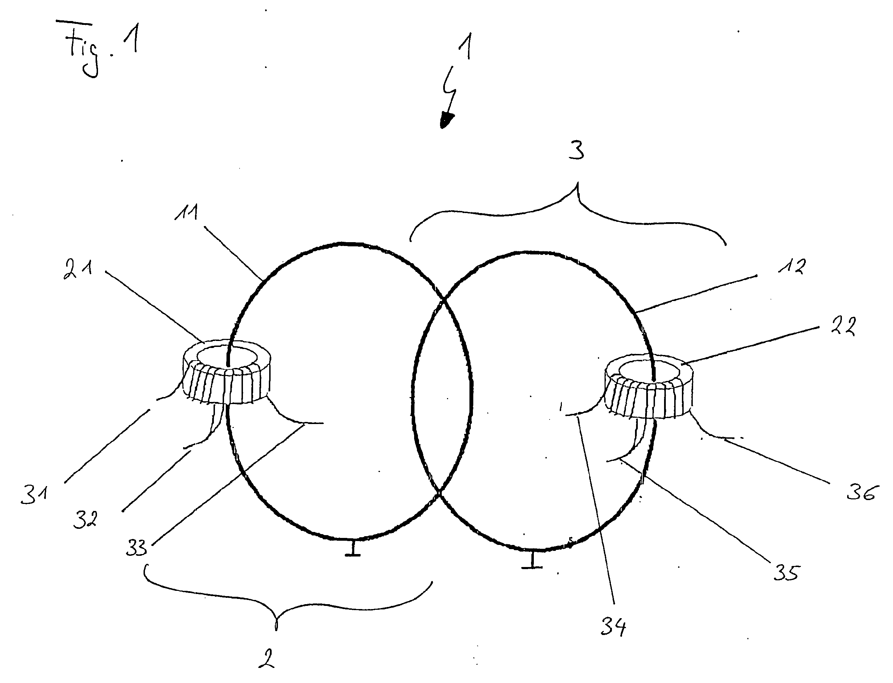

In Fig. 1 ist eine stark vereinfachte Darstellung des Aufbaus einer erfindungsgemäßen Detektor-Sonde 1 gezeigt. Anhand dieses Aufbaus wird die grundsätzliche Funktionsweise der Sonde 1 mit ihren zwei Spulenanordnungen 2 und 3 beschrieben. Hierbei ist die erste Spulenanordnung 2 als Sendespulenanordnung vorgesehen, während die zweite Spulenanordnung 3 als Empfangsanordnung ausgebildet ist.

Die erste Spulenanordnung 2 weist eine Schleife 11 und einen Ringkern 21 auf. Der Ringkern 21 hat mehrere Wicklungen. In der hier dargestellten Ausführung sind am Ringkern drei Anschlüsse 31, 32, 33 vorgesehen.

Die zweite Spulenanordnung 3 ist ähnlich wie die erste Spulenanordnung 2 aufgebaut und weist ebenfalls eine Schleife 12 mit einem Ringkern 22 auf. Auch der Ringkern 22 hat mehrere Wicklungen und weist drei Anschlüsse 34, 35, 36 auf.

Die beiden Schleifen 11 und 12 sind in dieser Ausführungsform so genannte Kurzschlussschleifen, die lediglich mit einer Windung ausgeführt sind. Des Weiteren sind die beiden Schleifen 11 und 12 zusätzlich geerdet.

An den drei Anschlüssen 31, 32, 33 der ersten Spulenanordnung 2 kann beispielsweise am Anschluss 32 die Spannungsversorgung angeschlossen werden. Am Anschluss 33 befindet sich die Verbindung zur Oszillatorschaltung, wohingegen der Anschluss 31 als Steuereingang verwendet wird.

Bei der zweiten Spulenanordnung 3 auf der Empfängerseite kann der Anschluss 35 auf Masse gelegt sein, wohingegen die beiden Anschlüsse 34 und 36 als Sensoreingänge fungieren, an denen die über den Ringkern 22 empfangenen Signale von einer nachgeschalteten Auswerteelektronik abgegriffen werden können. Die Wicklungen der Ringkerne 21, 22 können beispielsweise insgesamt 100 Windungen betragen, wobei die mittleren Anschlüsse 32, 35 etwa nach 50 Windungen vorgesehen sein können.

Im Folgenden wird auf die grundsätzliche Funktionsweise der erfindungsgemäßen Sonde 1 eingegangen. Über den ersten Ringkern 21 wird ein elektromagnetisches Wechselfeld oder elektromagnetische Impulse auf die Schleife 11 eingekoppelt. Die Funktionsweise einer derartigen Ringkerneinspeisung ist ähnlich der eines Transformators. Das elektromagnetische Wechselfeld oder die Impulse werden von der Schleife 11 ausgesendet und direkt oder indirekt über die Schleife 12 der zweiten Spulenanordnung 3 empfangen. Diese Wechselfelder oder Impulse induzieren in dem Ringkern 22 Signale, die in Form von Strom- und/oder Spannungsänderungen detektiert werden. Die Detektion dieser Signale findet über die beiden Ausgänge 34 und 36 mit einer nachgeschalteten Verarbeitung statt.

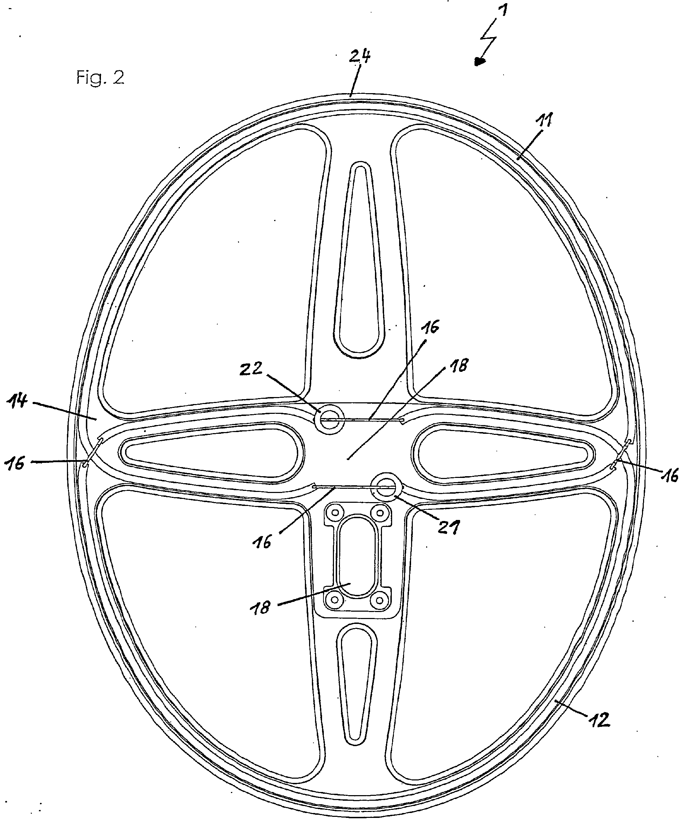

In Fig. 2 ist eine schematische Darstellung einer Sonde 1 in Ovalform gezeigt. Diese Sonde ist mit zwei Spulenanordnungen 2, 3 versehen. Die erste Spulenanordnung 2 weist eine erste Schleife 11 und einen ersten Ringkern 21 auf. Die zweite Spulenanordnung 3 wird maßgeblich aus der zweiten Schleife 12 und dem zweiten Ringkern 22 gebildet.

Die wesentlichen Teile der beiden Schleifen 11 und 12 sind auf einer Platine 14, insbesondere als gedruckte Leiterbahnen, ausgebildet. Hierbei sind die Schleifen 11, 12 durch breite Leiterbahnen realisiert. Die zwei Schleifen 11, 12 sind in einer Doppel-D-Konfiguration vorgesehen, die sich im so genannten Querbereich überlappt. Diese Überlappung wird zur elektromagnetischen, geometrischen Entkopplung der beiden Schleifen 11, 12 zueinander in Querrichtung verwendet.

Um eine einfache einlagige Leiterplatte verwenden zu können, sind an den Überlappungsbereichen der beiden Schleifen 11 und 12 jeweils Drahtbrücken 16 vorgesehen. Diese können beispielsweise aus einem isolierten, beweglichen Stück Draht bestehen.

Im mittleren Bereich der Sonde 1 befinden sich zwei weitere Drahtbrücken 16, die jeweils durch den ersten Ringkern 21 beziehungsweise den zweiten Ringkern 22 hindurchlaufen. An diesen Stellen werden ebenfalls Drahtbrücken 16 verwendet, so dass der Ringkern 21, 22 leicht aufgebracht werden kann und eine gute Kopplung zu den jeweiligen Schleifen 11 und 12 besteht. Die Drahtbrücken 16 können auch in Art von Drahtbügeln ausgeführt sein. Die Ringkerne 21, 22 sind auf der Sonde 1 derart platziert, dass möglichst keine elektromagnetische Kopplung miteinander vorliegt. Auch können mehrere Ringkerne 21, 22 für eine Schleife 11, 12 vorgesehen sein. Dies bietet sich insbesondere bei zum Empfang von Signalen verwendeten Schleifen 11, 12 an.

Das Gehäuse 24 der Sonde 1 weist Aussparungen für die Platine 14 auf, so dass die Platine 14, mit den darauf ausgebildeten Schleifen 11 und 12 einfach in das Gehäuse eingesetzt werden kann. Zur Aufnahme von Sende- und/oder Empfangselektronik für die Spulenanordnungen 2, 3 sind beispielsweise die Aufnahmeräume 18 vorgesehen. Eine derart konfigurierte Sonde kann sowohl im Continuous-Wave- wie auch im Puls-Induktionsverfahren betrieben werden. Hierzu sind dann entsprechende Spulen- oder Schleifenansteuerungen und entsprechende Empfängerverschaltungen in den Aufnahmeräumen 18 anbringbar.

Bei der hier dargestellten Sondengeometrie handelt es sich um ein vorentkoppeltes Schleifensystem, wobei durch die Überlappung der einzelnen Schleifen sich das Innen- und Außenfeld weitgehend kompensiert und somit der Sender vom Empfänger im Wesentlichen entkoppelt ist.

Zur Feinabstimmung der Detektionsempfindlichkeit der vorentkoppelten Sonde 1 werden insbesondere die biegbaren Drahtbrücken 16 verwendet, welche durch die Ringkerne 21, 22 geführt sind. Die Lage der Drahtbrücken 16 kann leicht variiert werden. So kann beispielsweise eine Drahtbrücke 16 weiter nach oben oder unten, oder nach außen oder innen verschoben werden. Hierdurch verändert sich die Kopplung der beiden Schleifen 11, 12 zueinander, so dass eine Feinjustierung des Kopplungsfaktors vorgenommen werden kann.

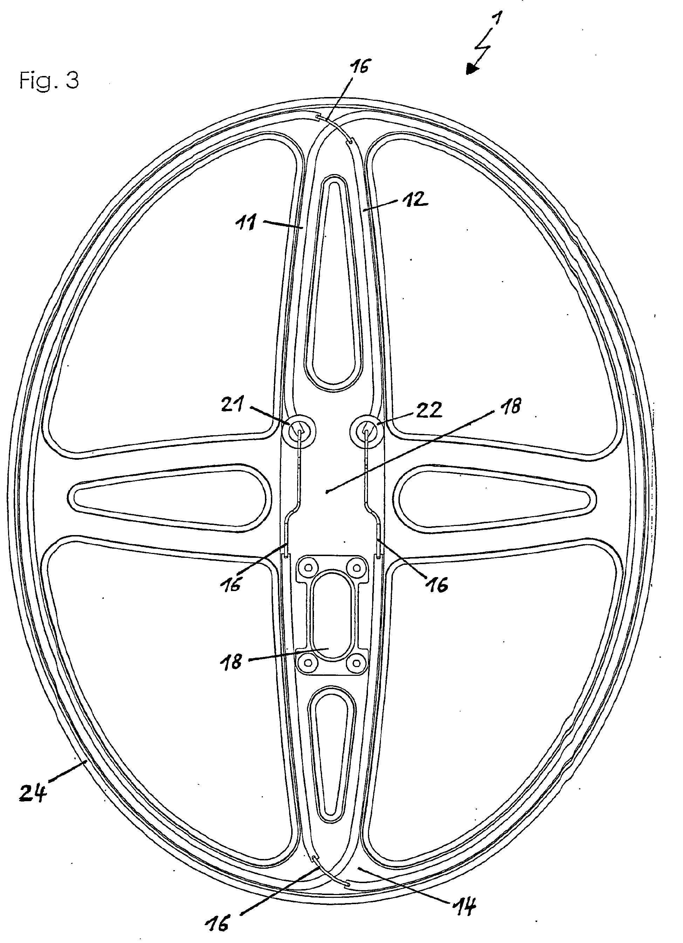

In Fig. 3 ist eine Sonde 1 mit einer ähnlichen Gehäuseform wie in Fig. 2 dargestellt. Hierbei sind die beiden Schleifen 11 und 12 wiederum in einer Doppel-D-Anordnung vorgesehen, wobei sie sich jedoch im Längsbereich überlappen. Dies bedeutet, dass eine so genannte Längsentkopplung der Sonde 1 vorgesehen ist.

Das Kopplungsverhalten zwischen den beiden Schleifen 11 und 12 kann wiederum über die exakte Lage der Drahtbrücken 16 feinjustiert werden. Auch in dieser Ausführungsform sind im Gehäuse 24 entsprechende Aussparungen für die Leiterplatte 14 mit den Schleifen 11 und 12 vorgesehen. So kann die Leiterplatte 14 in einem einfachen Produktionsschritt in das Sondengehäuse 24 gelegt werden.

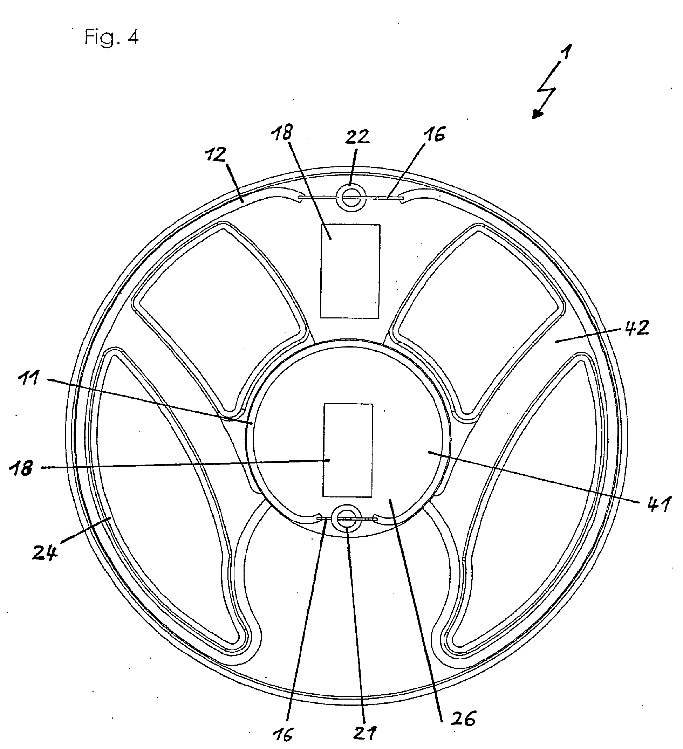

In der Fig. 4 ist eine Sonde 1 mit zwei zueinander konzentrisch liegenden Schleifen 11 und 12 dargestellt. Im Gegensatz zu den beiden vorherigen Ausführungsformen sind hier zwei Platinen 41 und 42 vorgesehen. Diese beiden Platinen 41 und 42 sind zueinander verstellbar angeordnet, so dass der gewünschte Kopplungsfaktor, z.B. eine vollständige Entkopplung, eingestellt werden kann. Nachdem die gewünschte Kopplung erreicht ist, kann die Platine 41 beispielsweise über Schrauben oder Einrastmittel relativ zur Platine 42 fixiert werden, so dass sich die Kopplung nicht mehr ändert.

In dieser Ausführungsform ist die außen liegende zweite Schleife 12 als Sendeschleife vorgesehen. Sie ist als Kurzschlusswindung ausgeführt. Durch den Ringkern 22 wird ein relativ hoher Wechselstrom in der Schleife 12 induziert. Durch diesen Wechselstrom wird die Ausbreitung der elektromagnetischen Signale der Sonde 1 erreicht.

Die vom Durchmesser kleinere erste Schleife 11 mit dem ersten Ringkern 21 ist ebenfalls als Kurzschlusswindung ausgeführt und fungiert als Empfangsschleife. Über den Ringkern 21 können die von der ersten Schleife 12 empfangenen Signale aufgenommen werden und einer nachgeschalteten Auswertung zugeleitet werden. Mit 26 ist ein Überlappungsbereich der Schleifen 11, 12 bezeichnet, der zur geometrischen Entkopplung der Spulenanordnungen vorgesehen ist.
Die Sendeschleife 12 ist z.B. auf der Platine 42 unter der in diesem Bereich oberen Platine 41 vorgesehen oder kann auch als untere oder obere Drahtbrücke (nicht gezeigt) ausgeführt sein.

In den Aussparungen 18 kann die entsprechende Sende-/Empfängerelektronik vorgesehen sein. Die Drahtbrücken 16, über die die Ringkerne 21, 22 mit den Schleifen 11, 12 gekoppelt sind, können wiederum zu einer Feinjustierung der Kopplung verwendet werden, ähnlich wie dies bereits in Bezug auf die Figuren 2 und 3 beschrieben wurde.

Grundsätzlich kann die erfindungsgemäße Sonde mit Schleifen oder auch mit Spulen mit mehreren Windungen realisiert werden. Dies ist hauptsächlich von den gewünschten Impedanz- bzw. Induktivitätswerten, die auf der Sende- und/oder Empfängerseite notwendig sind, abhängig. Hierdurch kann die Sonde auf bestimmte Suchaufgaben optimiert werden.

Mit der erfindungsgemäßen Sonde ist es möglich, den Aufbau von Metalldetektoren zu vereinfachen und auch relativ kleine Detektorsonden mit guter Detektionsgenauigkeit zu schaffen.

## Patentansprüche

1. Detektor-Sonde (1) mit einer Sende- und einer Empfängereinrichtung für elektromagnetische Signale,
wobei die Sendeeinrichtung eine Anordnung (2) mit einer ersten Schleife (11) und einen die Schleife (11) umschließenden ersten Ringkern (21) aufweist, wobei die Empfängereinrichtung eine zweite Anordnung (3) mit einer zweiten Schleife (12) und einen die Schleife (12) umschließenden zweiten Ringkern (22) aufweist,
**dadurch gekennzeichnet,**
**dass** die erste (11) und zweite Schleife (12) im Wesentlichen in der gleichen Ebene angeordnet sind,
**dass** die erste und die zweite Anordnung (2, 3) als ein entkoppeltes Spulensystem angeordnet sind,
**dass** der erste Ringkern (21) im Sinne eines Ringkerntransformators ausgeführt ist, wobei die Sekundärwicklung durch die durch den Ringkern (21) verlaufende Schleife (11) und die Primärwicklung durch eine erste Spule gebildet ist,
**dass** der zweite Ringkern (22) im Sinne eines Ringkerntransformators ausgeführt ist, wobei die Primärwicklung durch die durch den Ringkern (22) verlaufende Schleife (12) und die Sekundärwicklung durch eine zweite Spule gebildet ist,
**dass** die erste und die zweite Anordnung (2, 3) jeweils eine Spulenanordnung ausbilden, und
**dass** die erste (11) und/oder die zweite Schleife (12) auf Masse gelegt ist.

2. Detektor-Sonde nach Anspruch 1,
**dadurch gekennzeichnet,**
**dass** die erste Schleife (11) und/oder die zweite Schleife (12) eine Windung oder mindestens zwei Windungen aufweist.

3. Detektor-Sonde nach Anspruche 1 oder 2,
**dadurch gekennzeichnet,**
**dass** die erste (11) und/oder die zweite Schleife (12) zumindest teilweise auf einer Platine (14) ausgebildet ist.

4. Detektor-Sonde nach einem der Ansprüche 1 bis 3,
**dadurch gekennzeichnet,**
**dass** die erste (11) und die zweite Schleife (12) zumindest teilweise überlappend oder ineinander angeordnet sind.

5. Detektor-Sonde nach einem der Ansprüche 1 bis 4,
**dadurch gekennzeichnet,**
**dass** die erste (11) und/oder die zweite Schleife (12) relativ zueinander verschiebbar oder variierbar angeordnet sind.

6. Detektor-Sonde nach einem der Ansprüche 1 bis 5,
**dadurch gekennzeichnet,**
**dass** Teile der ersten (11) und/oder der zweiten Schleife (12) beweglich ausgeführt sind.

7. Detektor-Sonde nach einem der Ansprüche 1 bis 6,
**dadurch gekennzeichnet,**
**dass** die erste (11) und/oder die zweite Schleife (12) eine niedrige Induktivität aufweist und wenige Windungen vorgesehen sind.

8. Detektor-Sonde nach einem der Ansprüche 1 bis 7,
**dadurch gekennzeichnet,**
**dass** der Ringkern (21, 22) zum Induzieren eines Wechselstromes innerhalb der Schleife (11, 12) ausgelegt ist.

9. Detektor-Sonde nach einem der Ansprüche 1 bis 8,
**dadurch gekennzeichnet,**
**dass** die erste (11) und die zweite Schleife (12) in Doppel-D-Konfiguration zur Entkopplung in Längsrichtung oder zur Entkopplung in Querrichtung angeordnet sind.

10. Detektor-Sonde nach einem der Ansprüche 1 bis 9,
**dadurch gekennzeichnet,**
**dass** die erste (11) und die zweite Schleife (12) im Wesentlichen in einer konzentrischen Anordnung vorgesehen sind.

11. Detektor-Sonde nach einem der Ansprüche 1 bis 10,
**dadurch gekennzeichnet,**
**dass** die Detektor-Sonde (1) für einen Betrieb in CW- oder PI-Technik ausgelegt ist.

## Claims

1. Detector probe (1) having a transmitter device and a receiver device for electromagnetic signals,
wherein the transmitter device has an arrangement (2) with a first loop (11) and a first ring core (21) surrounding the loop (11),
wherein the receiver device has a second arrangement (3) with a second loop (12) and a second ring core (22) surrounding the loop (12), **characterised in that**
the first (11) and second loop (12) are arranged substantially in the same plane, the first and the second arrangement (2, 3) are arranged as a decoupled coil system,
the first ring core (21) is configured in the manner of a ring core transformer, wherein the secondary winding is formed by the loop (11) passing through the ring core (21) and the primary winding by a first coil,
the second ring core (22) is configured in the manner of a ring core transformer, wherein the primary winding is formed by the loop (12) passing through the ring core (22) and the secondary winding by a second coil,
the first and the second arrangement (2, 3) each form a coil arrangement, and the first (11) and / or the second loop (12) is / are earthed.

2. Detector probe according to claim 1,
**characterised in that**
the first loop (11) and / or the second loop (12) has / have one winding or at least two windings.

3. Detector probe according to claims 1 or 2,
**characterised in that**
the first (11) and / or the second loop (12) is / are formed at least in part on a circuit board (14).

4. Detector probe according to one of claims 1 to 3,
**characterised in that**
the first (11) and the second loop (12) are arranged at least partially overlapping or in each other.

5. Detector probe according to one of claims 1 to 4,
**characterised in that**
the first (11) and / or the second loop (12) is / are arranged so that they can be displaced or varied relative to each other.

6. Detector probe according to one of claims 1 to 5,
**characterised in that**
parts of the first (11) and / or the second loop (12) are designed to be movable.

7. Detector probe according to one of claims 1 to 6,
**characterised in that**
the first (11) and / or the second loop (12) has / have a low inductance and few windings are provided.

8. Detector probe according to one of claims 1 to 7,
**characterised in that**
the ring core (21, 22) is designed to induce an alternating current within the loop (11, 12).

9. Detector probe according to one of claims 1 to 8,
**characterised in that**
the first (11) and the second loop (12) are arranged in double D configuration for decoupling in longitudinal direction or for decoupling in transverse direction.

10. Detector probe according to one of claims 1 to 9,
**characterised in that**
the first (11) and the second loop (12) are provided substantially in a concentric arrangement.

11. Detector probe according to one of claims 1 to 10,
**characterised in that**
the detector probe (1) is designed for an operation in CW or PI technology.

## Revendications

1. Sonde-détecteur (1) avec un dispositif d'émission et un dispositif de réception pour des signaux électromagnétiques,
le dispositif d'émission présentant un arrangement (2) avec une première boucle (11) et un premier noyau annulaire (21) entourant la boucle (11),
le dispositif de réception présentant un deuxième arrangement (3) avec une deuxième boucle (12) et un deuxième noyau annulaire (22) entourant la boucle (12), **caractérisée en ce que**
la première (11) et la deuxième boucle (12) sont arrangées essentiellement au même niveau,
le premier et le deuxième arrangement (2, 3) sont arrangés en tant qu'un système de bobines découplé,
le premier noyau annulaire (21) est exécuté au sens d'un transformateur de noyau annulaire, l'enroulement secondaire étant formé par la boucle (11) passant par le noyau annulaire (21) et l'enroulement primaire étant formé par une première bobine,
le deuxième noyau annulaire (22) est exécuté au sens d'un transformateur de noyau annulaire, l'enroulement primaire étant formé par la boucle (12) passant par le noyau annulaire (22) et l'enroulement secondaire étant formé par une deuxième bobine,
le premier et le deuxième arrangement (2, 3) constituent chacun un arrangement de bobines et
la première (11) et/ou la deuxième boucle (12) est/sont mise(s) à la terre.

2. Sonde-détecteur selon la revendication 1,
**caractérisée en ce que**
la première boucle (11) et/ou la deuxième boucle (12) présente(nt) un enroulement ou au moins deux enroulements.

3. Sonde-détecteur selon les revendications 1 ou 2,
**caractérisée en ce que**
la première (11) et/ou la deuxième boucle (12) est/sont formée(s) au moins en partie sur une platine (14).

4. Sonde-détecteur selon une des revendications 1 à 3,
**caractérisée en ce que**
la première (11) et la deuxième boucle (12) sont arrangées au moins en partie de manière chevauchée ou l'une dans l'autre.

5. Sonde-détecteur selon une des revendications 1 à 4,
**caractérisée en ce que**
la première (11) et/ou la deuxième boucle (12) est/sont arrangée(s) de manière coulissante ou de manière variable l'une par rapport à l'autre.

6. Sonde-détecteur selon une des revendications 1 à 5,
**caractérisée en ce que**
des parties de la première (11) et/ou de la deuxième boucle (12) sont exécutées de manière mobile.

7. Sonde-détecteur selon une des revendications 1 à 6,
**caractérisée en ce que**
la première (11) et/ou la deuxième boucle (12) présente(nt) une inductance faible et peu d'enroulements sont prévus.

8. Sonde-détecteur selon une des revendications 1 à 7,
**caractérisée en ce que**
le noyau annulaire (21, 22) est conçu pour induire un courant alternatif à l'intérieur de la boucle (11, 12).

9. Sonde-détecteur selon une des revendications 1 à 8,
**caractérisée en ce que**
la première (11) et la deuxième boucle (12) sont arrangées en configuration double D pour le découplage dans le sens de la longueur ou pour le découplage dans le sens transversal.

10. Sonde-détecteur selon une des revendications 1 à 9,
**caractérisée en ce que**
la première (11) et la deuxième boucle (12) sont prévues essentiellement en un arrangement concentrique.

11. Sonde-détecteur selon une des revendications 1 à 10,
**caractérisée en ce que**
la sonde-détecteur (1) est conçue pour un fonctionnenment avec la technique CW ou la technique PI.
